# EUROPÄISCHE PATENTSCHRIFT

(11) **EP 2 162 778 B1**
(45) Veröffentlichungstag und Bekanntmachung des Hinweises auf die Patenterteilung: **23.02.2011**
(21) Anmeldenummer: 08750181.3
(22) Anmeldetag: 08.05.2008
(51) Int. Cl.: G02B 7/02

(54) **KAMERAOBJEKTIV, INSBESONDERE ZUM EINSATZ IN EINEM KRAFTFAHRZEUG, UND VERFAHREN ZU DESSEN HERSTELLUNG**
CAMERA OBJECTIVE, IN PARTICULAR FOR USE IN A MOTOR VEHICLE, AND METHOD FOR ITS PRODUCTION
OBJECTIF DE CAMÉRA, NOTAMMENT DESTINÉ À ÊTRE UTILISÉ DANS UN VÉHICULE AUTOMOBILE, ET PROCÉDÉ DE FABRICATION DE CELUI-CI

(30) Priorität: 26.06.2007 DE 102007029475
(43) Veröffentlichungstag der Anmeldung: 17.03.2010
(73) Patentinhaber: Robert Bosch GmbH, 70442 Stuttgart (DE)
(72) Erfinder: SCHMACK, Andreas, 71229 Leonberg (DE)
(86) Internationale Anmeldenummer: PCT/EP2008/055671
(87) Internationale Veröffentlichungsnummer: WO 2009/000591

(56) Entgegenhaltungen:
- JP-A- 9 274 125
- JP-A- 10 227 962
- JP-A- 11 326 732
- JP-A- 59 019 911
- JP-A- 62 011 815
- JP-A- 2002 251 769
- JP-A- 2005 055 811
- JP-A- 2005 107 117

## Beschreibung

### Stand der Technik

Kameramodule werden im Automotive-Bereich zu unterschiedlichen Zwecken, z.B. zur Aufnahme eines Bildes zur Darstellung auf einem Monitor oder für eine nachfolgende Datenverarbeitung, z.B. zum Erkennen von Gefahrensituationen oder für eine Fahrdynamikregelung eingesetzt. Hierbei sind die Kameramodule hohen mechanischen Beanspruchungen und, insbesondere während der Produktion, großen Temperaturschwankungen z.B. von -40° C bis +105° C, sowie unterschiedlichen Feuchtigkeitseinflüssen ausgesetzt.

Die Kameramodule weisen im Allgemeinen in einem Kameragehäuse ein Optikmodul mit einem auf einer Leiterplatte oder einem anderen Substrat aufgenommenen Bildaufnahmechip und einem Kameraobjektiv auf, das durch eine Linsenfassung und mehrere in diese eingesetzte Linsen gebildet wird. Die Linsen sind üblicherweise mit einer leicht herzustellenden zylinderförmigen Mantelfläche ausgebildet. Die Befestigung der Linsen in dem Objektiv erfolgt meist über ein Klemmsystem, z.B. Klemmringe, welche von oben bzw. unten gegen Auflageflächen der Linsen geschraubt werden.

Aufgrund der mechanischen Einwirkungen und temperaturbedingten Ausdehnungen kann sich die Position der Linse ändern, wodurch die optischen Eigenschaften des Kameramoduls verschlechtert werden, was zu einer Defokussierung und Unschärfe der Kamera und gegebenenfalls zu einem vollständigen Ausfall führen kann. Bei Objektiven, in denen die Frontlinse gegen eine hintere Auflagefläche gedrückt wird und ein zwischen der Linse und der Linsenfassung gesetzter O-Ring eine radiale Einklemmkraft ausübt, d.h. radial von außen gegen die Linsenmantelfläche drückt, ist die Sicherung der Linse in axialer Richtung besonders problematisch. Der O-Ring wird hierbei z.B. durch einen in axialer Richtung eingesetzten, schraubbaren Klemmring gesichert und verpresst, wodurch auch eine Abdichtung des Systems erfolgt. Der Klemmring erlaubt jedoch keine axiale Sicherung der Linse, da im Allgemeinen ein Spalt zwischen der Linse und dem Klemmring verbleibt, um die Anpresskraft für den O-Ring zu ermöglichen. Die Linse kann somit in axialer Richtung um diesen Spalt wandern oder einseitig verkippen. Bei ungünstiger Lage der Toleranzen der Einzelteile kann der O-Ring den gesamten Anpressdruck des Klemmrings aufnehmen, so dass ein geringer Spalt zur Linse verbleibt. Bei unzureichendem radialen Anpressdruck des O-Rings kann es jedoch bei mechanischem oder temperaturbedingtem Stress zu der Verlagerung der Linse in axialer Richtung kommen.

Die DE 10 2004 032 179 A1 zeigt ein Objektiv mit Kfz-tauglicher Dichtungskonfiguration, bei der das Objektiv durch einen als Linsenfassung dienenden Tubus mit einem eingesetzten Linsenstapel gebildet wird. Hierbei wird die äußere Frontlinse an ihrer Hinterseite durch einen Ringaufsatz und an ihrer konvex gewölbten Vorderseite bzw. Außenseite durch einen Vorschraubring gesichert, der an seiner zylindrischen Außenseite ein Außengewinde aufweist, das in ein Innengewinde der Linsenfassung geschraubt wird und mit seiner radial nach innen vorstehenden Fixierkante gegen einen äußeren Bereich der gewölbten Außenfläche der Frontlinse drückt. Durch Einschrauben des Vorschraubrings wird somit eine axiale Sicherung mit gewünschter Anpresskraft erreicht.

Die DE 1113101 A zeigt ein Linsensystem, bei dem eine Bikonvexlinse in einen Fassungskörper gelegt ist, indem die Rückseite der Linse an einer Lagerungskante des Fassungskörpers gesichert ist und ein gummiartiger, in Querschnitt runder Ring gegen die Vorderseite der Linse drückt. Hierbei ist an einem radial äußeren Bereich der Vorderseite der Linse eine Schrägfläche ausgebildet, gegen die der Ring drückt, wobei der Ring in einer Nut des Fassungskörpers aufgenommen ist.

Die US 2,394,894 zeigt eine Linsenanordnung, bei der ein Linsenstapel in einem Linsenrohr aufgenommen ist. Die Sicherung einer vorderen, konvexplanen Linse erfolgt, in dem ein radial äußerer Befestigungsbereich der konvexen Vorderfläche der Linse mit einer Lösung überzogen wird, die nach dem Trocknen eine Dichtung ausbildet. Eine axiale Sicherung nach vorne erfolgt über einen aufgesetzten Sicherungsring, der gegen den äußeren Bereich der konvexen Oberfläche drückt.

Derartige Ausbildungen sind jedoch im Allgemeinen recht aufwendig. Hierbei sind in der Linsenfassung mit ein oder mehreren Abstufungen auszubilden, zusätzlich zu Rillen oder Aufnahmen für einen Pressring oder Dichtungsring. Die hierbei erzeugte Verspannung der Linse durch eine Presskraft gegen eine z.B. konvexe Vorderfläche kann insbesondere bei dünneren Kunststofflinsen nachteilhaft sein.

Die JP 10 227962 A beschreibt eine optische Einrichtung für eine elektronischen Kamera, bei der Linsen formschlüssig in einer Linsenfassung aufgenommen sind.

Die JP 2005 055811 A zeigt ein Endoskop, das ein flexibles Element aufweist, das ein Zuführ- und Abfuhr-Rohr für einen Materialtransport mit einem optischen System kombiniert. In dem optischen System ist ein Glasfaser-Leiter als flexibles Lichtführungselement vorgesehen. Eine äußere Glaskappe ist über einen C-förmigen Ring fixiert, wobei zwei Linsen zwischen der Glaskappe und dem Glasfaser-Leiter aufgenommen sind. In dem Außenumfang der Glasplatte sowie dem im Umfang des umgebenden Gehäuses sind jeweils Nuten ausgebildet, so dass der C-förmige Ring als Formschlussmittel in beide Nuten eingesetzt wird.

Die JP 2002 251769 A beschreibt eine optische Linsenanordnung, bei der mehrere Linsen mit radialem Abstand zu einer umgebenden Fassung vorgesehen sind, wobei Abstandsringe zwischen den Linsen zur axialen Fixierung vorgesehen sind. Die Linsen sowie die Abstandsringe weisen auf ihrer Außenfläche Nuten auf, in die ein C-förmiger Ring eingesetzt wird, so dass er nach außen vorsteht. Nachfolgend wird durch Durchbrüche in der äußeren Linsenfassung ein Klebstoff derartig eingeführt, dass er die vorstehenden Ringe und die umgebende Linsen- und Mantelfläche, sowie die Innenfläche der Linsenfassung erfasst und somit ein Stoffschluss bewirkt.

### Offenbarung der Erfindung

Erfindungsgemäß erfolgt eine Sicherung zumindest einer Linse durch einen Formschluss an ihrer Mantelfläche. Die Linse weist zumindest eine nicht-plane Linsenfläche, d.h. Vorder- oder Rückseite auf, sie ist insbesondere eine bikonvexe oder konvex-konkave Linse.

Hierbei ist die Mantelfläche vorteilhafterweise zylindrisch, d.h. ohne Steigung gegenüber der optischen Achse bzw. parallel zur optischen Achse ausgebildet. Die zylindrische Linsenmantelfläche kann somit in die zylindrische Innenfläche der Linsenfassung eingesetzt werden, wobei die axiale Sicherung durch den gegenseitigen Formschluss erfolgt.

Erfindungsgemäß ist ein ergänzendes Formschlussmittel mit Stoffschlusswirkung zwischen zwei gegenüberliegende Nuten eingesetzt. Hierzu kann eine Kleberaupe eingesetzt und nachfolgend gehärtet werden, so dass zusätzlich zum Formschluss ein Stoffschluss erfolgt.

Durch die Ausbildung des Formschlusses an der Linsenmantelfläche kann eine genaue Positionierung auch ohne Einschränkung der Toleranzen der einzelnen Bauteile, insbesondere der Linse, erfolgen. Somit sind die bei herkömmlichen Sicherungen durch axial vorgesetzte Linsen und Dichtringe erforderlichen Toleranzen in der Bauteilformgebung und Positionierung nicht mehr so kritisch. Erfindungsgemäß kann insbesondere eine Einrastung ausgebildet werden, die einen sicheren Formschluss gewährleistet.

Besonders vorteilhaft können erfindungsgemäß Kunststoff- oder Glas-Presslinsen eingesetzt werden, die aus granularen Ausgangsstoffen hergestellt und in eine jeweils gewünschte Form gepresst werden können. Bei derartigen Linsen ist die erfindungsgemäße Ausbildung der Nut oder des Vorsprungs an der Linsenmantelfläche ohne größere Nachbearbeitung, insbesondere auch ohne eine aufwendige Nutfräsung an der Linsenaußenfläche, möglich.

Somit ergibt sich ein optisches System bzw. Kameraobjektiv mit hoher Positionsgenauigkeit auch bei bauteilbedingten Toleranzen, geringer mechanischer Verformung durch in axialer Richtung wirkende Anpresskräfte und geringen Herstellungskosten. Weiterhin kann die Linsenfassung eine relativ einfache Formgebung, z.B. mit im Wesentlichen zylindrischer Innenfläche und dem zusätzlichen Formschlussmittel in den Nuten aufweisen, ohne dass aufwendige Stufen, Vorsprünge und ähnliche Formgebungen erforderlich sind.

Erfindungsgemäß können auch komplexere Linsensysteme mit mehreren entlang der optischen Achse angeordneten Linsen gebildet werden, wobei unterschiedliche Formschlussmittel ein fehlerhaftes Einsetzen oder Schwierigkeiten beim Einsetzen vermeiden helfen können.

### Kurze Beschreibung der Zeichnungen

- Fig. 1: zeigt eine Ausführungsform mit in der Linsenmantelfläche und der Fassung ausgebildeten Nuten und zusätzlichem Formschlussmit- tel;
- Fig. 2: zeigt ein Flussdiagramm eines erfindungsgemäßen Herstellungs- verfahren.

### Beschreibung der Ausführungsformen

Ein Kameraobjektiv 1 wird in an sich bekannter Weise an einem hier nicht gezeigten Kameragehäuse einer Kamera befestigt, die in einem Fahrzeug eingesetzt wird. Das Kameraobjektiv 1 weist eine Linsenfassung 3 auf, die am Kameragehäuse befestigt wird. Die Linsenfassung 3 ist z. B. aus einem Metall oder einem Kunststoff gefertigt und weist eine zylindrische Innenfläche 3a auf. In der Linsenfassung 3 ist ein Linsensystem mit mindestens einer Linse 4 aufgenommen, wobei die mindestens eine Linse 4 je nach der optischen Anforderung ausgebildet ist, insbesondere wie gezeigt als Konvex-konkav-Linse oder auch z. B. als Konvex-Konvex-Linse. Grundsätzlich werden erfindungsgemäß aber sämtliche Linsenausführungen erfasst, d.h. sphärische oder asphärische Linsenflächen mit beliebigem Krümmungsradius. Die Linse 4 oder die mehreren Linsen können hierbei aus einem Glas- oder Kunststoffmaterial hergestellt sein. Eine optische Achse liegt vorzugsweise auf der Symmetrieachse der Linsenfassung 3.

Die Linse 4 weist in der gezeigten Ausführungsform eine konvex gekrümmte Vorderfläche 4a, eine in der gezeigten Ausführungsform konkav gekrümmte hintere Fläche 4b sowie eine am Umfang ausgebildete Linsenmantelfläche 4c auf. Vorteilhafterweise ist die Linsenmantelfläche 4c zylindrisch. Grundsätzlich sind jedoch auch konische Ausbildungen möglich.

Erfindungsgemäß ist ein Formschluss zwischen der Innenfläche 3a der Linsenfassung 3 und der Linsenmantelfläche 4c vorgesehen, der eine Positionierung und axiale Sicherung der Linse 4 in der Linsenfassung 3 sicher stellt. Der Formschluss kann in Umfangsrichtung umlaufend sein, muss aber nicht.

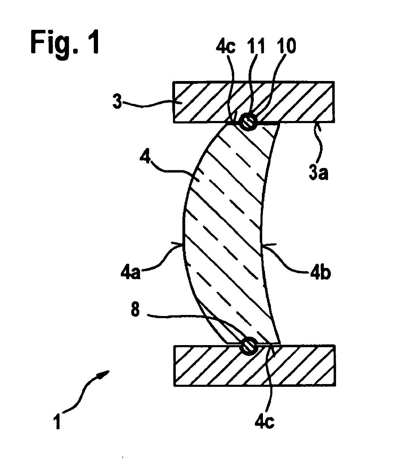

Fig. 1 zeigt eine Ausführungsform, bei der in der Linsenmantelfläche 4c eine Nut 8 ausgebildet ist. Weiterhin ist auch an der Innenfläche 3a der Linsenfassung 3 eine Nut 10 ausgebildet, wobei der Formschluss durch ein in beide Nuten 8, 10 eingreifendes Formschlusselement 11 bewirkt wird, der einen ergänzenden Stoffschluss bewirkt, z.B. als Kleberaupe.

Hierbei ist eine genau komplementäre Form der Nut 8, 10 und des eingreifenden Mittels 11 möglich. Es ist jedoch grundsätzlich auch ein Formschluss durch nicht genau komplementäre bzw. inverse Formen möglich.

Erfindungsgemäß können mehrere Linsen 4 in axialer Richtung hintereinander in der Linsenfassung 3 vorgesehen und jeweils durch den erfindungsgemäßen radialen Formschluss in axialer Richtung gesichert sein. Hierbei können unterschiedliche Formschlüsse ausgebildet sein, um beim Einsetzen der mehreren Linsen von einer axialen Richtung her die Verrastung der Linsen 4 an falschen axialen Positionen zu vermeiden.

Bei der Ausführungsform der Fig. 1 wird vorzugsweise in die umlaufende Nut 8 der Linsenmantelfläche 4c Klebstoff als Kleberaupe eingelegt und nachfolgend die Linse 4 eingesetzt. Weiterhin kann auch zunächst die Linse 4 eingesetzt und nachfolgend in die gegenüberliegenden Nuten 8, 10 der Klebstoff eingebracht werden, der nachfolgend aushärtet. Als Klebstoff kann z.B. ein Thermoplast eingesetzt werden, so dass die Verklebung durch nachfolgendes Erwärmen und Abkühlen erfolgen kann. Alternativ hierzu können aber auch andere Klebstoffe verwendet werden, wie z. B. 2- Komponentenkleber, UV-aushärtende Klebstoffe, wärmeaushärtende Klebstoffe.

Die Ausbildung der Nut 10 an der Innenfläche 3a der Fassung 3 kann z.B. durch nachträgliches Einfräsen erfolgen. Auch die Ausbildung der Nut 8 an der Linsenmantelfläche 8c kann grundsätzlich durch nachfolgendes Einfräsen der zunächst zylindrischen Linsenmantelfläche 4c erfolgen. Erfindungsgemäß ist jedoch auch bereits eine Ausbildung der Nut 8 bei der Herstellung der Linse 4 möglich, indem die Linse 4 aus einem optisch transparentem Kunststoff oder Glas bereits in entsprechender Formgebung hergestellt wird.

Hierbei können z.B. Herstellungstechniken durch Zusammenpressung eines Granulates aus Kunststoff oder auch aus Glas mit anschließendem Aufschmelzen verwendet werden.

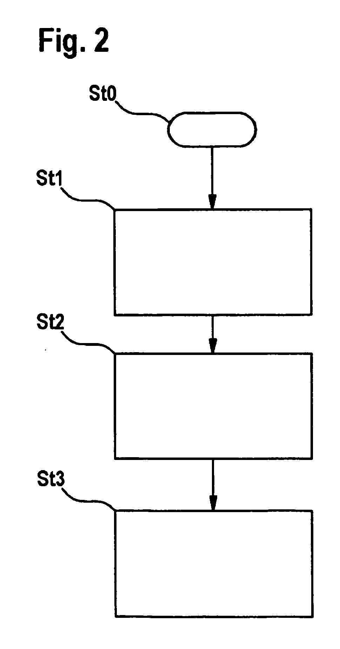

Das in Fig. 2 gezeigten Herstellungsverfahren beginnt somit in Schritt St0 beim Start, woraufhin nachfolgend in Schritt St1 die Linsenfassung 3 bereitgestellt oder hergestellt wird, wobei an der Innenfläche 3a der Linsenfassung 3 ein erstes Formschlussmittel, d.h. eine Nut 10 ausgebildet wird. Nachfolgend wird in Schritt St2 die Linse 4 mit ihrem Formschlussmittel 8 ausgebildet, z. B. als Press-Linse aus einem Granulat oder durch Fräsen einer Ausgangslinse mit glatter Linsenmantelfläche 4c. Hierbei können die Schritte St1 und St2 entsprechend auch vertauscht sein. In Schritt St3 wird die Linse 4 in die Kamerafassung 3 eingesetzt. Hierbei kann in Schritt St3 zunächst als weiteres Formschlussmittel eine entsprechende Kleberaupe in die Nut 10 in der Innenfläche 3a der Linsenfassung 3 eingesetzt und nachfolgend die Linse 4 eingesetzt werden.

Weiterhin kann auch die Linse 4 in eine Form eingelegt und die Fassung aus z. B. Kunststoff oder Aluminium nachfolgend um die Linse 4 herum ausgebildet, z. B. gespritzt werden.

Weiterhin kann die Linsenfassung auch mehrteilig sein mit einer Unterteilung entlang des Umfangs, z. B. durch Halbierung in Längsrichtung. Bei einer derartigen Ausführungsform kann die Linse 4 oder können die mehreren Linsen zunächst in eine Hälfte eingelegt werden, woraufhin nachfolgend die andere Hälfte aufgesetzt und mit der anderen Hälfte verbunden wird, so dass die formschlüssige Aufnahme erfolgt. Hierbei können die Hälften z. B. durch Schrauben, Kleben, Klemmen, eine formschlüssige Aufnahme, z. B. auch eine Schnappverbindung oder Rastverbindung, miteinander verbunden werden.

## Patentansprüche

1. Kameraobjektiv (1), insbesondere zum Einsatz in einem Kraftfahrzeug, wobei das Kameraobjektiv (1) mindestens aufweist:
eine Linsenfassung (3) zur Anbringung an einem Kameragehäuse,
mindestens eine in der Linsenfassung (3) aufgenommene Linse (4) mit einer vorderen Linsenfläche (4a), einer hinteren Linsenfläche (4b) und einer Linsenmantelfläche (4c) zur Anlage an einer Innenfläche (3a) der Linsenfassung (3),
wobei zwischen der Linsenmantelfläche (4c) und der Innenfläche (3a) der Linsenfassung (3) eine formschlüssige Verbindung (8, 10, 11) ausgebildet ist,
wobei die mindestens eine Linse (4) mindestens eine nicht-plane Linsenfläche (4a, 4b) aufweist,
**dadurch gekennzeichnet, dass**
an der Linsenmantelfläche (4c) eine Nut (8) und an der Innenfläche (3a) der Linsenfassung (3) eine Nut (10) ausgebildet ist, und
ein zwischen der Linse (4) und der Linsenfassung (3) vorgesehenes Formschlussmittel (11) in die beiden Nuten (8, 10) formschlüssig eingreift, und
das Formschlussmittel (11) zusätzlich zu dem Formschluss einen Stoffschluss ausbildet

2. Kameraobjektiv nach Anspruch 1, **dadurch gekennzeichnet, dass** die mindestens eine Linse (4) bikonvex oder konvex-konkav ist.

3. Kameraobjektiv nach Anspruch 1 oder 2, **dadurch gekennzeichnet, dass** die Innenfläche (3a) der Linsenfassung (3) und die Linsenmantelfläche (4c) zylindrisch ausgebildet sind.

4. Kameraobjektiv nach einem der vorherigen Ansprüche, **dadurch gekennzeichnet, dass** das Formschlussmittel ein ausgehärteter Kleber ist.

5. Kameraobjektiv nach Anspruch 4, **dadurch gekennzeichnet, dass** der ausgehärtete Kleber eine ausgehärtete Kleberaupe (11) ist.

6. Kameraobjektiv nach einem der vorherigen Ansprüche, **dadurch gekennzeichnet, dass** die formschlüssige Verbindung in Umfangsrichtung zwischen der Innenfläche (3a) der Linsenfassung (3) und der Linsenmantelfläche (4c) der Linse (4) durchgängig oder unterbrochen umlaufend ausgebildet ist.

7. Kameraobjektiv nach einem der vorherigen Ansprüche, **dadurch gekennzeichnet, dass** die Linse (4) als Presslinse aus einem Granulat, z. B. Glas- oder Kunststoffgranulat, gefertigt ist.

8. Verfahren zum Herstellen eines Kameraobjektivs nach einem der vorherigen Ansprüche, mit mindestens folgenden Schritten:
Ausbilden oder Einsetzen der Linse (4) in die Linsenfassung (3) oder
Ausbilden einer Linsenfassung (3) um die Linse (4) derartig, dass ein Formschlussmittel (8) der Linsenmantelfläche (4c) der Linse (4) über ein weiteres Formschlussmittel (11) in einen formschlüssigen Eingriff mit einem Formschlussmittel (10) an der Innenfläche (3a) der Linsenfassung (3) gelangt (St1, St2, St3),
wobei das Formschlussmittel (11) zusätzlich zu dem Formschluss einen Stoffschluss ausbildet.

9. Verfahren nach Anspruch 8, mit mindestens folgenden Schritten:
Bereitstellen oder Herstellen einer Linsenfassung (3) mit einem ersten Formschlussmittel (10) (St1),
Ausbilden oder Einsetzen der Linse (4) in die Linsenfassung (3) derartig, dass ein Formschlussmittel (8) der Linsenmantelfläche (4c) der Linse (4) über das weitere Formschlussmittel (11) in einen formschlüssigen Eingriff mit einem Formschlussmittel (10) an der Innenfläche (3a) der Linsenfassung (3) gelangt (St2, St3) und den Stoffschluss ausbildet.

10. Verfahren nach Anspruch 9, **dadurch gekennzeichnet, dass** die Linse (4) mit ihrem Formschlussmittel (8) durch ein Pressverfahren ausgebildet wird (St2) und nachfolgend in die Linsenfassung (3) eingesetzt wird.

11. Verfahren nach Anspruch 8, **dadurch gekennzeichnet, dass** die Linsenfassung (3) um die fertig gestellte Linse (4) herum unter Ausbildung des Formschlusses ausgebildet wird.

12. Verfahren nach Anspruch 11, **dadurch gekennzeichnet, dass** die Linsenfassung (3) mehrteilig und in Umfangsrichtung unterteilt ist und die Linse (4) zunächst in ein Teil, z. B. eine Hälfte, der Linsenfassung (3) eingelegt wird und nachfolgend mindestens ein weiterer Teil der Linsenfassung, z. B. die andere Hälfte, aufgesetzt wird und die Linsenfassung (3) durch Verbinden ihrer Teile fertig gestellt wird.

## Claims

1. Camera objective (1), in particular for use in a motor vehicle, the camera objective (1) having at least:
a lens mount (3) for fixing on a camera housing,
at least one lens (4) which is held in the lens mount (3) and has a front lens face (4a), a rear lens face (4b) and a lateral lens face (4c) for bearing against an inner face (3a) of the lens mount (3),
a positively locking connection (8, 10, 11) being formed between the lateral lens face (4c) and the inner face (3a) of the lens mount (3), the at least one lens (4) having at least one nonplanar lens face (4a, 4b), **characterized in that**
a groove (8) is formed at the lateral lens face (4c),
and a groove (10) is formed at the inner face (3a) of the lens mount (3), and positively locking means (11) provided between the lens (4) and the lens mount (3) engages in the two grooves (8, 10) in a positively locking fashion, and
the positively locking means (11) forms a bonded lock in addition to the positive lock.

2. Camera objective according to Claim 1, **characterized in that** the at least one lens (4) is biconvex or convex/concave.

3. Camera objective according to Claim 1 or 2, **characterized in that** the inner face (3a) of the lens mount (3), and the lateral lens face (4c) are of cylindrical design.

4. Camera objective according to one of the preceding claims, **characterized in that** the positively locking means is a cured adhesive.

5. Camera objective according to Claim 4, **characterized in that** the cured adhesive is a cured adhesive bead (11).

6. Camera objective according to one of the preceding claims, **characterized in that** the positively locking connection is of continuous or interrupted circumferential design in the peripheral direction between the inner face (3a) of the lens mount (3) and the lateral lens face (4c) of the lens (4).

7. Camera objective according to one of the preceding claims, **characterized in that** the lens (4) is produced as a pressed lens made from granules, for example glass or plastic granules.

8. Method for producing a camera objective according to one of the preceding claims, having at least the following steps:
forming or inserting the lens (4) into the lens mount (3), or
forming a lens mount (3) around the lens (4) in such a way that a positively locking means (8) of the lateral lens face (4c) of the lens (4) engages in a positively locking fashion via a further positively locking means (11) with a positively locking means (10) at the inner face (3a) of the lens mount (3) (St1, St2, St3),
the positively locking means (11) forming a bonded lock in addition to the positive lock.

9. Method according to Claim 8, having at least the following steps:
providing or producing a lens mount (3) with a first positively locking means (10) (St1),
forming or inserting the lens (4) into the lens mount (3) in such a way that a positively locking means (8) of the lateral lens face (4c) of the lens (4) engages in a positively locking fashion via the further positively locking means (11) with a positively locking means (10) at the inner face (3a) of the lens mount (3) (St2, St3) and forms the bonded lock.

10. Method according to Claim 9, **characterized in that** the lens (4) is formed (St2) with its positive locking means (8) by a pressing method, and then subsequently inserted into the lens mount (3).

11. Method according to Claim 8, **characterized in that** the lens mount (3) is formed around the finished lens (4) with the formation of the positive lock.

12. Method according to Claim 11, **characterized in that** the lens mount (3) is multipartite and subdivided in the peripheral direction and the lens (4) is firstly inserted into one part, for example a half, of the lens mount (3), and subsequently at least one further part of the lens mount, for example the other half, is placed on, and the lens mount (3) is finished by connecting its parts.

## Revendications

1. Objectif de caméra (1), en particulier pour l'utilisation dans un véhicule automobile, l'objectif de caméra (1) présentant au moins :
une monture de lentille (3) pour le montage sur un boîtier de caméra,
au moins une lentille (4) reçue dans la monture de lentille (3), avec une face avant de lentille (4a), une face arrière de lentille (4b) et une face d'enveloppe de lentille (4c) pour l'application contre une face intérieure (3a) de la monture de lentille (3),
une connexion par engagement par correspondance géométrique (8, 10, 11) étant réalisée entre la face d'enveloppe de lentille (4c) et la face intérieure (3a) de la monture de lentille (3),
l'au moins une lentille (4) présentant au moins une face de lentille non plane (4a, 4b),
**caractérisé en ce**
**qu'**une rainure (8) est réalisée sur la face d'enveloppe de lentille (4c) et une rainure (10) est réalisée sur la face intérieure (3a) de la monture de lentille (3), et
un moyen d'engagement par correspondance géométrique (11) prévu entre la lentille (4) et la monture de lentille (3) vient en prise par engagement par correspondance géométrique dans les deux rainures (8, 10), et
le moyen d'engagement par correspondance géométrique (11) constitue en plus de l'engagement par correspondance géométrique un engagement par liaison de matière.

2. Objectif de caméra selon la revendication 1, **caractérisé en ce que** l'au moins une lentille (4) est biconvexe ou convexe-concave.

3. Objectif de caméra selon la revendication 1 ou 2, **caractérisé en ce que** la face intérieure (3a) de la monture de lentille (3) et la face d'enveloppe de lentille (4c) sont réalisées sous forme cylindrique.

4. Objectif de caméra selon l'une quelconque des revendications précédentes, **caractérisé en ce que** le moyen d'engagement par correspondance géométrique est une colle durcie.

5. Objectif de caméra selon la revendication 4, **caractérisé en ce que** la colle durcie est un boudin de colle durcie (11).

6. Objectif de caméra selon l'une quelconque des revendications précédentes, **caractérisé en ce que** la connexion par engagement par correspondance géométrique est réalisée dans la direction périphérique entre la face intérieure (3a) de la monture de lentille (3) et la face d'enveloppe de lentille (4c) de la lentille (4), de manière continue ou interrompue sur la périphérie.

7. Objectif de caméra selon l'une quelconque des revendications précédentes, **caractérisé en ce que** la lentille (4) est réalisée sous forme de lentille pressée constituée d'un granulat, par exemple un granulat de verre ou de plastique.

8. Procédé de fabrication d'un objectif de caméra selon l'une quelconque des revendications précédentes, comprenant au moins les étapes suivantes :
réalisation ou insertion de la lentille (4) dans la monture de lentille (3) ou réalisation d'une monture de lentille (3) autour de la lentille (4) de telle sorte qu'un moyen d'engagement par correspondance géométrique (8) de la face d'enveloppe de lentille (4c) de la lentille (4) parvienne en engagement par correspondance géométrique par le biais d'un autre moyen d'engagement par correspondance géométrique (11) avec un moyen d'engagement par correspondance géométrique (10) sur la face intérieure (3a) de la monture de lentille (3) (St1, St2, St3),
le moyen d'engagement par correspondance géométrique (11) constituant, en plus de l'engagement par correspondance géométrique, un engagement par liaison de matière.

9. Procédé selon la revendication 8, comprenant au moins les étapes suivantes :
fourniture ou fabrication d'une monture de lentille (3) avec un premier moyen d'engagement par correspondance géométrique (10) (S+1),
réalisation ou insertion de la lentille (4) dans la monture de lentille (3) de telle sorte qu'un moyen d'engagement par correspondance géométrique (8) de la face d'enveloppe de lentille (4c) de la lentille (4) parvienne en engagement par correspondance géométrique par le biais de l'autre moyen d'engagement par correspondance géométrique (11) avec un moyen d'engagement par correspondance géométrique (10) sur la face intérieure (3a) de la monture de lentille (3) (St2, St3) et constitue l'engagement par liaison de matière.

10. Procédé selon la revendication 9, **caractérisé en ce que** la lentille (4) est réalisée (St2) avec son moyen d'engagement par correspondance géométrique (8) par un processus de pressage et est ensuite insérée dans la monture de lentille (3).

11. Procédé selon la revendication 8, **caractérisé en ce que** la monture de lentille (3) est réalisée autour de la lentille (4) fabriquée finie en créant l'engagement par correspondance géométrique.

12. Procédé selon la revendication 11, **caractérisé en ce que** la monture de lentille (3) est réalisée en plusieurs parties et est divisée dans la direction périphérique et la lentille (4) est d'abord introduite dans une partie, par exemple une moitié, de la monture de lentille (3), et ensuite au moins une autre partie de la monture de lentille, par exemple l'autre moitié, est mise en place et la monture de lentille (3) est finie par l'assemblage de ses parties.
